# EUROPEAN PATENT SPECIFICATION

(11) **EP 1 072 477 B1**
(45) Date of publication and mention of the grant of the patent: **20.03.2002**
(21) Application number: 98920550.5
(22) Date of filing: 26.05.1998
(51) Int. Cl.: B60R 19/18, B29C 45/00

(54) **BUMPERS FOR MOTOR VEHICLES**
STOSSDÄMPFER FÜR KRAFTFAHRZEUGE
PARE-CHOCS POUR VEHICULES AUTOMOBILES

(30) Priority: 24.04.1998 ES 9800875
(43) Date of publication of application: 31.01.2001
(73) Proprietor: Fundaciò Ascamm Centre Tecnològic, 08290 Cerdanyola del Valles (ES)
(72) Inventor: BARCELO RAFOLS, Antonio, E-08800 Vilanova i la Geltru (ES)
(74) Representative: Curell Aguilà, Marcelino
(86) International application number: ES9800148
(87) International publication number: WO9955555

(56) References cited:
- ES-A- 2 043 216
- ES-A- 2 043 851
- ES-U- 261 367
- US-A- 3 866 963
- US-A- 5 423 673
- PATENT ABSTRACTS OF JAPAN CD MIJP 9502 & JP 07 040 373 A (NISSAN MOTOR CO. LTD.) 10 February 1995

## Description

### Field of the Invention

This invention relates to a bumper for automobiles for fitting at the front and at the rear of the vehicle and defining lateral ends and comprising a plastics material structure having a front surface and a rear surface, wherein the structure, from at least one of the surfaces, is provided with at least one first widening defining an internal cavity closed by first walls, with each of the first widenings being produced by using the technique of gas injection.

### Prior Art Reference

Automobiles, preferably sedans and the like, are usually provided with units, the purpose of which is to absorb impacts which they may receive during use. Some of these units are known as bumpers.

These bumpers are usually preferably mounted to the front and rear portions of the vehicle, although at time they are extended in a curve along the side of the vehicle located immediate to the said front and rear portions.

The bumpers are usually made from various parts, among which there may be cited as the main ones those which confer thereon the external aspect and those which reinforce the strength thereof, acting as impact absorbers.

The parts conferring the external aspect on the bumper are generally made from injection molded plastics material.

The part or parts acting as impact absorbers are usually made from either plactics material or metal, with different conversion techniques being used for the preparation thereof. To ensure their functionality, a part or a filling, as the case may be, of adequate material is frequently added to them.

Nevertheless, the known impact absorbers referred to above have the drawback of being additional parts with weight and production process operations that respectively affect the vehicle fuel consumption and the manufacturing cost, both of which are hard to reduce.

Document JP 07040373 as the closest prior art discloses the possibility of creating an internal cavity in a bumper. The object of said internal cavity is to lower the mould clamping pressure. However, the dimensions of said internal cavity is not specified nor is any indication made of the possible improvements in the impact absorption

### Summary of the Invention

It is an object of the invention to overcome the above-mentioned drawback. This object is achieved with a bumper of the type first mentioned above wherein the first widenings are being situated in such a way that the largest dimension thereof is arranged substantially in the direction extending between the lateral ends of the bumper, and where the structure is provided, on at least one of the surfaces, with at least one second widening defining an internal cavity closed by second walls; each of the second widenings being produced by using the technique of gas injection and being situated in such a way that the largest dimension thereof is arranged at an angle relative to the largest dimension of the first widenings.

### Brief Description of the Drawing

Further advantages and features of the invention will be appreciated from the following description in which there is related a preferred embodiment of the invention, with out any limiting nature, and with reference to the accompanying drawings, in which:
Figure 1 is a perspective view of one embodiment of the bumper of the invention.
Figure 2 is a plan view of the bumper of Figure 1, shown in section along a plane parallel to the longitudinal edges thereof.
Figure 3 is a side elevation view of a section of the same bumper on the plane of symmetry thereof.
Figure 4 is a rear elevation view of a bumper having first and second widenings.
Figure 5 is a rear perspective view of a bumper formed by three aligned portions.

### Detailed Description of the Invention

The bumper of the invention defines lateral ends 2 which are usually folded back to be close to the sides of the vehicle, both in the case of a front bumper and of a rear bumper.

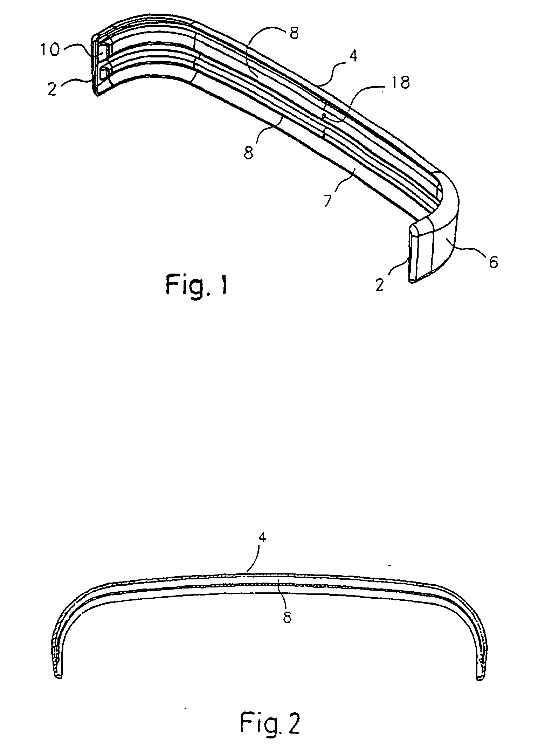

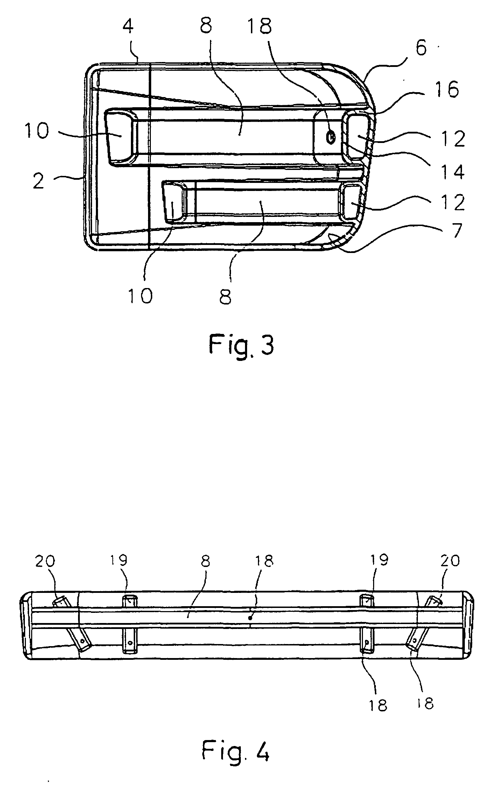

It comprises a structure 4 of plastics material which may optionally be accompanied by other elements, mainly having ornamental purposes. The structure 4 has a front surface 6 and a rear surface 7 (Figure 1). When the bumper is mounted to the vehicle, it is the latter surface that faces the vehicle and obviously the front surface 6 is the opposite surface to the rear surface 7. In the embodiment described and shown in Figures 1 to 4 incl., the lateral ends of the structure 4 coincide with the very ends 2 of the bumper.

According to the invention, the structure 4 is provided with one or more first widenings 8 which are produced in the same operation of manufacturing the bumper by use of the gas injection technique. Although the figure only show first widenings 8 extending from the rear surface 7, whereby they extend away from the front surface 6, the invention also contemplates that these first widenings 8 may also be provided from one of said front 6 or rear 7 surfaces, or from both.

The first widenings have closed ends 10, in such a way that each first widening 8 defines a cavity 12 closed by first walls. In the example described, the cavity 12 is closed by the structure 4 itself, by a C-shaped partition 14, the arms 16 of which, as indicated hereinbefore, extend from the rear surface 7, and by the ends 10, although it maintains a communication with the outside which is the port 18 through which the gas injection has been effected. All the walls enclosing a cavity 12 are integrally formed.

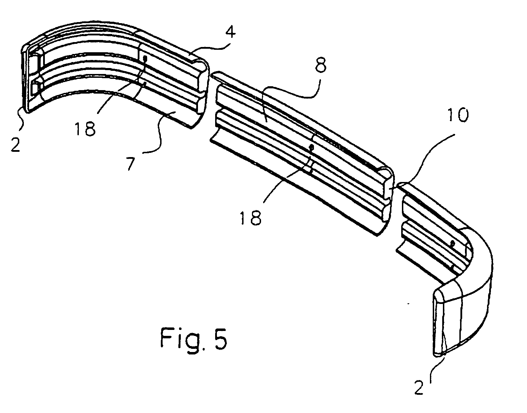

The width, height and length dimensions of the said first widenings 8 are riot of necessity constant. In the embodiment illustrated in Figures 1, 2 and 3, the width dimension is defined substantially by the distance between the front surface 6 and the outer surface of the C-shaped partition 14. The height dimension is the one existing between the arms 16 of the partition 14 and the length dimension is the one extending between the ends 10 of the respective widenings 8. The length dimension is the largest dimension of each first widening 8 and reference is also made to this largest dimension by indicating that it is arranged in the direction extending between the lateral ends 2 of the bumper, without it being understood of necessity that this largest dimension extends from immediately adjacent one of said ends to immediately adjacent the other end. One example of first widenings 8, the ends 10 of which are separated from the ends 2 of the bumper is to be found in the embodiment illustrated in Figure 5, although in this case also each first widening 8 is arranged in the direction extending between the lateral ends 2 of the bumper. The bumper illustrated in Figure 5 is formed by three separate portions, forming an aligned group.

As a result of the widenings 8, the bumper of the invention provides sufficient strength to withstand a collision with a rigid solid at low vehicle speed, without permanent deformation and without harming the vehicle.

The invention also contemplates the presence of second widenings 19, 20 having the features of the first widenings 8, although they are located in the structure 4 in such a way that the largest dimension thereof is arranged at an angle relative to the first widenings 8.

There is also contemplated the possibility of one or more of the widenings 8, 19, 20 being filled with a compressible material, such as expanded polystyrene, expanded polyurethane or expanded polypropylene.

In the above described bumper, the use of parts acting as impact absorbers has been suppressed, thereby eliminating the cost of manufacture of the tooling required for the manufacture thereof, and the assembly operations for such parts. Furthermore, the weight of the automobile is significantly reduced and the handling of the bumper is facilitated, since it is more rigid.

## Claims

1. A bumper for automobiles for fitting at the front and at the rear of the vehicle and defining lateral ends (2) and comprising a structure (4) of plastics material having a front surface (6) and a rear surface (7), wherein said structure (4), from at least one of said surfaces (6, 7), is provided with at least one first widening (8) defining an internal cavity (12) closed by first walls (4, 10, 14, 16), with each of said first widenings (8) being produced by using the technique of gas injection, **characterized in that** said first widenings (8) are being situated in such a way that the largest dimension thereof is arranged substantially in the direction extending between said lateral ends (2) of the bumper, and where said structure is provided, on at least one of said surfaces, with at least one second widening (19, 20) defining an internal cavity closed by second walls; each of said second widenings (19, 20) being produced by using the technique of gas injection and being situated in such a way that the largest dimension thereof is arranged at an angle relative to said largest dimension of said first widenings (8).

2. The bumper of claim 1, wherein said first walls (4, 10, 14, 16) have a thickness ranging from 6 to 2 mm.

3. The bumper of one of claims 1 or 2, wherein said plastics material is polypropylene with the addition of elastomers.

4. The bumper of at least one of claims 1 to 3, wherein at least one of said internal cavities (12) contains a compressible material.

5. The bumper of claim 4, wherein said compressible material is expanded polystyrene, expanded polyurethane or expanded polypropylene.

6. The bumper of at least one of claims 1 to 5, being formed by at least two separate portions.

7. The bumper of claim 6, wherein said portions form an aligned group.

## Patentansprüche

1. Stoßfänger für Kraftfahrzeuge zur Anbringung an der Vorderseite und an der Rückseite des Fahrzeugs, wobei der Stoßfänger seitliche Enden (2) bildet und eine Konstruktion (4) aus Kunststoffmaterial mit einer vorderen Oberfläche (6) und einer hinteren Oberfläche (7) aufweist, wobei die Konstruktion (4) wenigstens von einer der Oberflächen (6, 7) her mit wenigstens einer ersten Erweiterung (8) versehen ist, die einen inneren Hohlraum (12) bildet, der durch erste Wände (4, 10, 14, 16) geschlossen ist, wobei jede der ersten Erweiterungen (8) unter Verwendung der Gastreibtechnik gebildet ist,
**dadurch gekennzeichnet, dass** die ersten Erweiterungen (8) derart positioniert sind, dass ihre größte Dimension im Wesentlichen in der zwischen den seitlichen Enden (2) des Stoßfängers verlaufenden Richtung angeordnet ist, und wobei die Konstruktion an wenigstens einer der Oberflächen mit wenigstens einer zweiten Erweiterung (19, 20) versehen ist, die einen durch zweite Wände geschlossenen inneren Hohlraum bildet;
wobei jede der zweiten Erweiterungen (19, 20) unter Verwendung der Gastreibtechnik hergestellt und derart positioniert ist, dass ihre größte Dimension in einem Winkel relativ zu der größten Dimension der ersten Erweiterungen (8) angeordnet ist.

2. Stoßfänger nach Anspruch 1,
wobei die ersten Wände (4, 10, 14, 16) eine Dicke im Bereich von 6 bis 2 mm aufweisen.

3. Stoßfänger nach einem der Ansprüche 1 oder 2,
wobei das Kunststoffmaterial Polypropylen mit dem Zusatz von Elastomeren ist.

4. Stoßfänger nach wenigstens einem der Ansprüche 1 bis 3,
wobei wenigstens einer der inneren Hohlräume (12) ein zusammendrückbares Material enthält.

5. Stoßfänger nach Anspruch 4,
wobei das zusammendrückbare Material expandiertes Polystyrol, expandiertes Polyurethan oder expandiertes Polypropylen ist.

6. Stoßfänger nach wenigstens einem der Ansprüche 1 bis 5,
der durch wenigstens zwei separate Bereiche gebildet ist.

7. Stoßfänger nach Anspruch 6,
wobei die Bereiche eine ausgefluchtete Gruppe bilden.

## Revendications

1. Pare-chocs pour des automobiles pour un montage à l'avant et à l'arrière du véhicule et définissant des extrémités latérales (2) et comportant une structure (4) en matière plastique ayant une surface avant (6) et une surface arrière (7), ladite structure (4), depuis au moins une desdites surfaces (6, 7), étant pourvue d'au moins un premier élargissement (8) définissant une cavité interne (12) fermée par des premières parois (4, 10, 14, 16), avec chacun desdits premiers élargissements (8) qui est produit en utilisant la technique d'injection de gaz, **caractérisé en ce que** lesdits premiers élargissements (8) sont situés d'une manière telle que la plus grande dimension de ceux-ci est disposée sensiblement dans la direction s'étendant entre lesdites extrémités latérales (2) du pare-chocs, et où ladite structure est pourvue, sur au moins une desdites surfaces, d'au moins un deuxième élargissement (19, 20) définissant une cavité interne fermée par des deuxièmes parois; chacun desdits deuxièmes élargissements (19, 20) étant fabriqué en utilisant la technique d'injection de gaz et étant situé d'une manière telle que sa plus grande dimension est disposée avec un angle par rapport à ladite plus grande dimension desdits premiers élargissements (8).

2. Pare-chocs selon la revendication 1, dans lequel lesdites premières parois (4, 10, 14, 16) ont une épaisseur s'étendant de 6 à 2 mm.

3. Pare-chocs selon l'une des revendications 1 ou 2, dans lequel ladite matière plastique est du polypropylène avec l'addition d'élastomères.

4. Pare-chocs selon au moins l'une des revendications 1 à 3, dans lequel au moins une desdites cavités internes (12) contient un matériau compressible.

5. Pare-chocs selon la revendication 4, dans lequel ledit matériau compressible est du polystyrène expansé, du polyuréthane expansé ou du polypropylène expansé.

6. Pare-chocs selon au moins l'une des revendications 1 à 5, qui est formé par au moins deux parties séparées.

7. Pare-chocs selon la revendication 6, dans lequel lesdites parties forment un groupe aligné.
